# EUROPEAN PATENT APPLICATION

(11) **EP 3 609 259 A1**
(43) Date of publication of application: **12.02.2020**
(21) Application number: 18797578.4
(22) Date of filing: 11.05.2018
(51) Int. Cl.: H04W 72/04, H04W 88/04

(54) **METHOD AND APPARATUS FOR ALLOCATING SIDELINK RESOURCE USING RELAY UE IN WIRELESS COMMUNICATION SYSTEM**

(30) Priority: 11.05.2017 US 201762505024 P; 11.05.2017 US 201762505028 P
(71) Applicant: LG Electronics Inc., Seoul 07336 (KR)
(72) Inventor: LEE, Youngdae, Seoul 06772 (KR); HONG, Jongwoo, Seoul 06772 (KR); LEE, Jaewook, Seoul 06772 (KR)
(74) Representative: Mooser, Sebastian Thomas
(86) International application number: PCT/KR2018/005421
(87) International publication number: WO 2018/208114

(57) **Abstract**

Provided are a method and an apparatus for relay user equipment (UE) configurating/allocating a sidelink resource for a remote UE in a UE-network relaying operation using the sidelink, in a wireless communication system. More specifically, a first UE receives, from a second UE, sidelink control information (SCI) including information relating to the ID of the first UE or the second UE. When information relating to the ID indicates the first UE, sidelink data is received from the second UE through a sidelink resource indicated by the SCI. Or, when the information relating to the ID indicates the second UE, the sidelink data is transmitted to the second UE through the sidelink resource indicated by the SCI.

## Description

### TECHNICAL FIELD

The present disclosure relates to wireless communication, and more particularly, to a method and apparatus for allocating a sidelink resource through a relay UE in a wireless communication system.

### BACKGROUND

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Proximity-based service (ProSe) studies have identified use cases and scenarios that may be provided in a 3GPP LTE system based on user equipments (UE) adjacent to each other. The identified scenarios include general and public safety services. A standard radio access network (RAN) work for activating ProSe began with a focus on public safety applications in LTE Rel-12. Device to device discovery and device to device broadcast communications within network coverage have been standardized in LTE Rel-12. Further, in order to enable type 1 discovery for partial and external network coverage scenario, L3-based UE-network relay reusing LTE Rel-12 D2D communication, and basic priority processing mechanism for D2D communication, a work on a public safety service is being continued in LTE Rel-13.

There is a great deal of interest in connecting and managing a low-cost machine-type communication (MTC) device using LTE technology. One important example of a low cost MTC device is wearable, with the advantage that the wearable may be almost always close to a smartphone that may act as a relay. A method of applying device-to-device (D2D) to such a device, including non-3GPP short-range technology, is being studied. In particular, one of aspects that should be further enhanced in LTE technology in order to enable D2D support wearable and MTC applications is the enhancement of a UE-network relay function.

ProSe UE-to-network relaying architecture does not distinguish traffic of a relay UE from traffic of a remote UE at an access layer. This model limits an ability of a network and an operator to treat the remote UE as a separate device (e.g., for billing or security). In particular, the 3GPP security association does not reach end-to-end between the network and the remote UE, which means that the relay UE has a plain text connection to communication of the remote UE. To support end-to-end security through a relay link, service continuity, possibly end-to-end (E2E) quality of service, efficient operation with multiple remote UEs, and efficient path switching between Uu and D2D wireless interfaces, UE-network relay should be improved. Relay using D2D may be performed based on technologies other than 3GPP, such as Bluetooth and Wi-Fi. Some improvements, such as service continuity, may make relaying these technologies more attractive in commercial use cases. This may be particularly useful for wearable due to use patterns in close proximity to a user's smartphone as well as form factor limitations (e.g., battery size limitations) that make direct Uu connections impractical. Relaying may enable significant power savings for remote UEs. This is especially true in deep coverage scenarios. One cost-effective way to introduce relay is to use a unidirectional D2D link between the remote UE and the relay UE. In this case, the relay UE is used for relaying only uplink data from the remote UE. The advantage of this approach is that no additional radio frequency (RF) function for D2D reception is added to the remote UE.

Meanwhile, work has started in international telecommunication union (ITU) and 3GPP to develop requirements and specifications for new radio (NR) systems. The NR system may be called another name, e.g., new radio access technology (new RAT). 3GPP has to identify and develop the technology components needed for successfully standardizing the NR timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

### SUMMARY

In a UE-network relay operation, which currently uses a sidelink, sidelink resources for remote UEs are configured/allocated by the base station. To this end, a scheduling request/grant for sidelink resource allocation should be exchanged between the base station and the remote UE through the relay UE. However, this causes unnecessary signaling and power consumption and is also not preferable in that resource allocation is delayed.

In an aspect, a method in which a first user equipment (UE) transmits or receives sidelink data in a wireless communication system is provided. The method includes receiving sidelink control information (SCI) comprising information about an identifier (ID) of the first UE or a second UE from the second UE, when the information about the ID indicates the first UE, receiving the sidelink data from the second UE through a sidelink resource indicated by the SCI, and when the information about the ID indicates the second UE, transmitting the sidelink data to the second UE through a sidelink resource indicated by the SCI.

In another aspect, a first user equipment (UE) in a wireless communication system is provided. The first UE includes a memory, a transceiver, and a processor connected to the memory and the transceiver. The processor is configured to control the transceiver to receive sidelink control information (SCI) comprising information about an identifier (ID) of the first UE or a second UE from the second UE, control the transceiver to receive the sidelink data from the second UE through a sidelink resource indicated by the SCI, when the information about the ID indicates the first UE, and control the transceiver to transmit the sidelink data to the second UE through a sidelink resource indicated by the SCI, when the information about the ID indicates the second UE.

As sidelink resources for a remote UE are allocated by a relay UE rather than the base station, scheduling requests/grants do not need to be exchanged between the remote UE and the base station. Therefore, signaling overhead, power consumption, and delay in resource allocation can all be reduced.

### BRIEF DESCRIPTION OF THE DRAWINGS

FIG. 1 shows 3GPP LTE system architecture.
FIG. 2 shows a block diagram of a user plane protocol stack of an LTE system.
FIG. 3 shows a block diagram of a control plane protocol stack of an LTE system.
FIG. 4 shows an NG-RAN architecture.
FIG. 5 shows an example of bidirectional UE-network relay.
FIG. 6 shows an example of unidirectional UE-network relay.
FIG. 7 shows a method of performing sidelink communication according to an embodiment 1-1 of the present disclosure.
FIG. 8 shows a method of performing sidelink communication according to an embodiment 1-2 of the present disclosure.
FIG. 9 shows a method of performing sidelink communication according to an embodiment 2-1 of the present disclosure.
FIG. 10 shows a method of performing sidelink communication according to an embodiment 2-2 of the present disclosure.
FIG. 11 shows a wireless communication system in which an embodiment of the present disclosure is implemented.

### DETAILED DESCRIPTION

Hereinafter, in the present disclosure, a wireless communication system based on a 3rd generation partnership project (3GPP) or institute of electrical and electronics engineers (IEEE) is mainly described. However, the present disclosure is not limited thereto, and the present disclosure may be applied to other wireless communication systems, e.g., new radio access technology (NR), having the same characteristics to be described hereinafter.

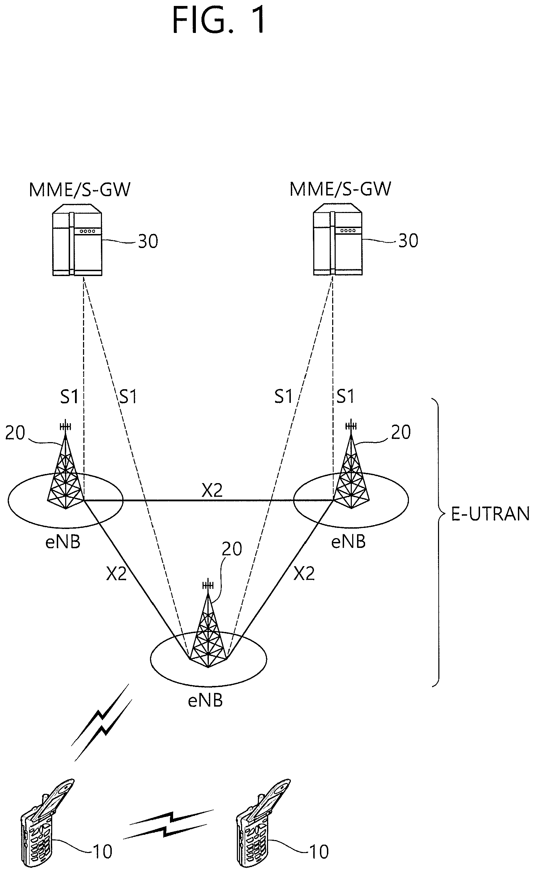

FIG. 1 shows 3GPP LTE system architecture. Referring to FIG. 1, the 3GPP long-term evolution (LTE) system architecture includes one or more user equipment (UE; 10), an evolved-UMTS terrestrial radio access network (E-UTRAN) and an evolved packet core (EPC). The UE 10 refers to a communication equipment carried by a user. The UE 10 may be fixed or mobile, and may be referred to as another terminology, such as a mobile station (MS), a user terminal (UT), a subscriber station (SS), a wireless device, etc.

The E-UTRAN includes one or more evolved node-B (eNB) 20, and a plurality of UEs may be located in one cell. The eNB 20 provides an end point of a control plane and a user plane to the UE 10. The eNB 20 is generally a fixed station that communicates with the UE 10 and may be referred to as another terminology, such as a base station (BS), an access point, etc. One eNB 20 may be deployed per cell.

Hereinafter, a downlink (DL) denotes communication from the eNB 20 to the UE 10. An uplink (UL) denotes communication from the UE 10 to the eNB 20. A sidelink (SL) denotes communication between the UEs 10. In the DL, a transmitter may be a part of the eNB 20, and a receiver may be a part of the UE 10. In the UL, the transmitter may be a part of the UE 10, and the receiver may be a part of the eNB 20. In the SL, the transmitter and receiver may be a part of the UE 10.

The EPC includes a mobility management entity (MME) and a serving gateway (S-GW). The MME/S-GW 30 provides an end point of session and mobility management function for the UE 10. For convenience, MME/S-GW 30 will be referred to herein simply as a "gateway," but it is understood that this entity includes both the MME and S-GW. A packet data network (PDN) gateway (P-GW) may be connected to an external network.

The MME provides various functions including non-access stratum (NAS) signaling to eNBs 20, NAS signaling security, access stratum (AS) security control, inter core network (CN) node signaling for mobility between 3GPP access networks, idle mode UE reachability (including control and execution of paging retransmission), tracking area list management (for UE in idle and active mode), packet data network (PDN) gateway (P-GW) and S-GW selection, MME selection for handovers with MME change, serving GPRS support node (SGSN) selection for handovers to 2G or 3G 3GPP access networks, roaming, authentication, bearer management functions including dedicated bearer establishment, support for public warning system (PWS) (which includes earthquake and tsunami warning system (ETWS) and commercial mobile alert system (CMAS)) message transmission. The S-GW host provides assorted functions including per-user based packet filtering (by e.g., deep packet inspection), lawful interception, UE Internet protocol (IP) address allocation, transport level packet marking in the DL, UL and DL service level charging, gating and rate enforcement, DL rate enforcement based on access point name aggregate maximum bit rate (APN-AMBR).

Interfaces for transmitting user traffic or control traffic may be used. The UE 10 is connected to the eNB 20 via a Uu interface. The UEs 10 are connected to each other via a PC5 interface. The eNBs 20 are connected to each other via an X2 interface. Neighboring eNBs may have a meshed network structure that has the X2 interface. The eNB 20 is connected to the gateway 30 via an S1 interface.

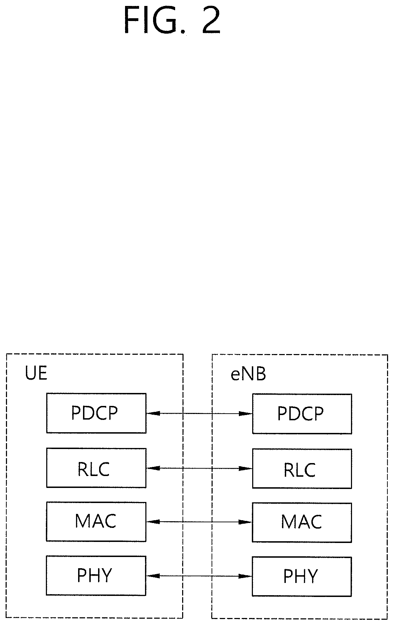

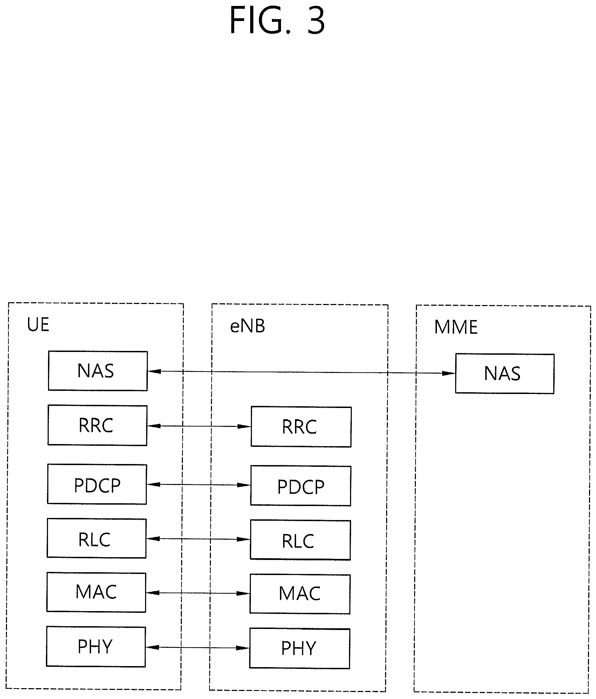

FIG. 2 shows a block diagram of a user plane protocol stack of an LTE system. FIG. 3 shows a block diagram of a control plane protocol stack of an LTE system. Layers of a radio interface protocol between the UE and the E-UTRAN may be classified into a first layer (L1), a second layer (L2), and a third layer (L3) based on the lower three layers of the open system interconnection (OSI) model that is well-known in the communication system.

A physical (PHY) layer belongs to the L1. The PHY layer provides a higher layer with an information transfer service through a physical channel. The PHY layer is connected to a medium access control (MAC) layer, which is a higher layer of the PHY layer, through a transport channel. A physical channel is mapped to the transport channel. Data between the MAC layer and the PHY layer is transferred through the transport channel. Between different PHY layers, i.e., between a PHY layer of a transmission side and a PHY layer of a reception side, data is transferred via the physical channel.

A MAC layer, a radio link control (RLC) layer, and a packet data convergence protocol (PDCP) layer belong to the L2. The MAC layer provides services to the RLC layer, which is a higher layer of the MAC layer, via a logical channel. The MAC layer provides data transfer services on logical channels. The RLC layer supports the transmission of data with reliability. Meanwhile, a function of the RLC layer may be implemented with a functional block inside the MAC layer. In this case, the RLC layer may not exist. The PDCP layer provides a function of header compression function that reduces unnecessary control information such that data being transmitted by employing IP packets, such as IPv4 or Ipv6, can be efficiently transmitted over a radio interface that has a relatively small bandwidth.

A radio resource control (RRC) layer belongs to the L3. The RLC layer is located at the lowest portion of the L3, and is only defined in the control plane. The RRC layer controls logical channels, transport channels, and physical channels in relation to the configuration, reconfiguration, and release of radio bearers (RBs). The RB signifies a service provided the L2 for data transmission between the UE and E-UTRAN.

Referring to FIG. 2, the RLC and MAC layers (terminated in the eNB on the network side) may perform functions such as scheduling, automatic repeat request (ARQ), and hybrid ARQ (HARQ). The PDCP layer (terminated in the eNB on the network side) may perform the user plane functions such as header compression, integrity protection, and ciphering.

Referring to FIG. 3, the RLC and MAC layers (terminated in the eNB on the network side) may perform the same functions for the control plane. The RRC layer (terminated in the eNB on the network side) may perform functions such as broadcasting, paging, RRC connection management, RB control, mobility functions, and UE measurement reporting and controlling. The NAS control protocol (terminated in the MME of gateway on the network side) may perform functions such as a SAE bearer management, authentication, LTE_IDLE mobility handling, paging origination in LTE_IDLE, and security control for the signaling between the gateway and UE.

A physical channel transfers signaling and data between PHY layer of the UE and eNB with a radio resource. A physical channel consists of a plurality of subframes in time domain and a plurality of subcarriers in frequency domain. One subframe, which is 1ms, consists of a plurality of symbols in the time domain. Specific symbol(s) of the subframe, such as the first symbol of the subframe, may be used for a physical downlink control channel (PDCCH). The PDCCH carries dynamic allocated resources, such as a physical resource block (PRB) and modulation and coding scheme (MCS).

A DL transport channel includes a broadcast channel (BCH) used for transmitting system information, a paging channel (PCH) used for paging a UE, a downlink shared channel (DL-SCH) used for transmitting user traffic or control signals, a multicast channel (MCH) used for multicast or broadcast service transmission. The DL-SCH supports HARQ, dynamic link adaptation by varying the modulation, coding and transmit power, and both dynamic and semi-static resource allocation. The DL-SCH also may enable broadcast in the entire cell and the use of beamforming.

A UL transport channel includes a random access channel (RACH) normally used for initial access to a cell, and an uplink shared channel (UL-SCH) for transmitting user traffic or control signals. The UL-SCH supports HARQ and dynamic link adaptation by varying the transmit power and potentially modulation and coding. The UL-SCH also may enable the use of beamforming.

The logical channels are classified into control channels for transferring control plane information and traffic channels for transferring user plane information, according to a type of transmitted information. That is, a set of logical channel types is defined for different data transfer services offered by the MAC layer.

The control channels are used for transfer of control plane information only. The control channels provided by the MAC layer include a broadcast control channel (BCCH), a paging control channel (PCCH), a common control channel (CCCH), a multicast control channel (MCCH) and a dedicated control channel (DCCH). The BCCH is a downlink channel for broadcasting system control information. The PCCH is a downlink channel that transfers paging information and is used when the network does not know the location cell of a UE. The CCCH is used by UEs having no RRC connection with the network. The MCCH is a point-to-multipoint downlink channel used for transmitting multimedia broadcast multicast services (MBMS) control information from the network to a UE. The DCCH is a point-to-point bidirectional channel used by UEs having an RRC connection that transmits dedicated control information between a UE and the network.

Traffic channels are used for the transfer of user plane information only. The traffic channels provided by the MAC layer include a dedicated traffic channel (DTCH) and a multicast traffic channel (MTCH). The DTCH is a point-to-point channel, dedicated to one UE for the transfer of user information and can exist in both UL and DL. The MTCH is a point-to-multipoint downlink channel for transmitting traffic data from the network to the UE.

UL connections between logical channels and transport channels include the DCCH that can be mapped to the UL-SCH, the DTCH that can be mapped to the UL-SCH and the CCCH that can be mapped to the UL-SCH. Downlink connections between logical channels and transport channels include the BCCH that can be mapped to the BCH or DL-SCH, the PCCH that can be mapped to the PCH, the DCCH that can be mapped to the DL-SCH, and the DTCH that can be mapped to the DL-SCH, the MCCH that can be mapped to the MCH, and the MTCH that can be mapped to the MCH.

An RRC state indicates whether an RRC layer of the UE is logically connected to an RRC layer of the E-UTRAN. The RRC state may be divided into two different states such as an RRC idle state (RRC_IDLE) and an RRC connected state (RRC_CONNECTED). In RRC_IDLE, the UE may receive broadcasts of system information and paging information while the UE specifies a discontinuous reception (DRX) configured by NAS, and the UE has been allocated an identification (ID) which uniquely identifies the UE in a tracking area and may perform public land mobile network (PLMN) selection and cell re-selection. Also, in RRC_IDLE, no RRC context is stored in the eNB.

In RRC_CONNECTED, the UE has an E-UTRAN RRC connection and a context in the E-UTRAN, such that transmitting and/or receiving data to/from the eNB becomes possible. Also, the UE can report channel quality information and feedback information to the eNB. In RRC_CONNECTED, the E-UTRAN knows the cell to which the UE belongs. Therefore, the network can transmit and/or receive data to/from UE, the network can control mobility (handover and inter-radio access technologies (RAT) cell change order to GSM EDGE radio access network (GERAN) with network assisted cell change (NACC)) of the UE, and the network can perform cell measurements for a neighboring cell.

In RRC_IDLE, the UE specifies the paging DRX cycle. Specifically, the UE monitors a paging signal at a specific paging occasion of every UE specific paging DRX cycle. The paging occasion is a time interval during which a paging signal is transmitted. The UE has its own paging occasion. A paging message is transmitted over all cells belonging to the same tracking area. If the UE moves from one tracking area (TA) to another TA, the UE will send a tracking area update (TAU) message to the network to update its location.

5G system is a 3GPP system consisting of 5G access network (AN), 5G core network (CN) and UE. 5G access network is an access network comprising a next generation radio access network (NG-RAN) and/or non-3GPP access network connecting to a 5G core network. NG-RAN is a radio access network that supports one or more of the following options with the common characteristics that it connects to 5G core network:
1) Standalone new radio (NR).
2) NR is the anchor with E-UTRA extensions.
3) Standalone E-UTRA.
4) E-UTRA is the anchor with NR extensions.

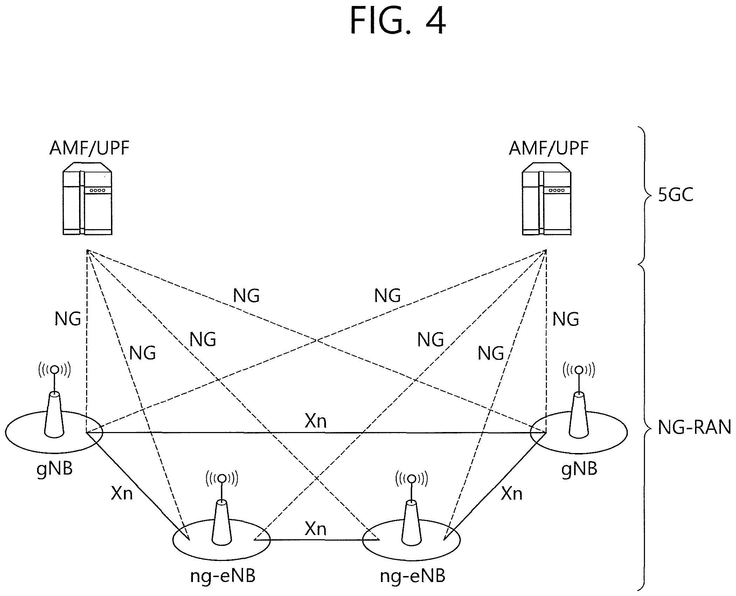

FIG. 4 shows an NG-RAN architecture. Referring to FIG. 4, the NG-RAN includes at least one NG-RAN node. The NG-RAN node includes at least one gNB and/or at least one ng-eNB. The gNB provides NR user plane and control plane protocol terminations towards the UE. The ng-eNB provides E-UTRA user plane and control plane protocol terminations towards the UE. The gNBs and ng-eNBs are interconnected with each other by means of the Xn interface. The gNBs and ng-eNBs are also connected by means of the NG interfaces to the 5G CN. More specifically, the gNBs and ng-eNBs are connected to the access and mobility management function (AMF) by means of the NG-C interface and to the user plane function (UPF) by means of the NG-U interface.

The gNB and ng-eNB host the following functions:
- Functions for radio resource management: Radio bearer control, radio admission control, connection mobility control, dynamic allocation of resources to UEs in both uplink and downlink (scheduling);
- Internet protocol (IP) header compression, encryption and integrity protection of data;
- Selection of an AMF at UE attachment when no routing to an AMF can be determined from the information provided by the UE;
- Routing of user plane data towards UPF(s);
- Routing of control plane information towards AMF;
- Connection setup and release;
- Scheduling and transmission of paging messages;
- Scheduling and transmission of system broadcast information (originated from the AMF or operations & maintenance (O&M));
- Measurement and measurement reporting configuration for mobility and scheduling;
- Transport level packet marking in the uplink;
- Session management;
- Support of network slicing;
- QoS flow management and mapping to data radio bearers;
- Support of UEs in RRC_INACTIVE state;
- Distribution function for non-assess stratum (NAS) messages;
- Radio access network sharing;
- Dual connectivity;
- Tight interworking between NR and E-UTRA.

The AMF hosts the following main functions:
- NAS signaling termination;
- NAS signaling security;
- AS security control;
- Inter CN node signaling for mobility between 3GPP access networks;
- Idle mode UE reachability (including control and execution of paging retransmission);
- Registration area management;
- Support of intra-system and inter-system mobility;
- Access authentication;
- Access authorization including check of roaming rights;
- Mobility management control (subscription and policies);
- Support of network slicing;
- Session management function (SMF) selection.

The UPF hosts the following main functions:
- Anchor point for Intra-/Inter-radio access technology (RAT) mobility (when applicable);
- External protocol data unit (PDU) session point of interconnect to data network;
- Packet routing & forwarding;
- Packet inspection and user plane part of policy rule enforcement;
- Traffic usage reporting;
- Uplink classifier to support routing traffic flows to a data network;
- Branching point to support multi-homed PDU session;
- QoS handling for user plane, e.g. packet filtering, gating, UL/DL rate enforcement;
- Uplink traffic verification (service data flow (SDF) to QoS flow mapping);
- Downlink packet buffering and downlink data notification triggering.

The SMF hosts the following main functions:
- Session management;
- UE IP address allocation and management;
- Selection and control of UP function;
- Configures traffic steering at UPF to route traffic to proper destination;
- Control part of policy enforcement and QoS;
- Downlink data notification.

A sidelink is described. The sidelink is an interface between UEs for sidelink communication and sidelink discovery. The sidelink corresponds to a PC5 interface. Sidelink communication is an AS function that enables two or more neighboring UEs to directly communicate proximity-based services (ProSe) using E-UTRA technology without going through any network node. Sidelink discovery is an AS function that enables two or more neighboring UEs to directly discover ProSe using E-UTRA technology without going through any network node.

A sidelink physical channel includes a physical sidelink broadcast channel (PSBCH) for transmitting system and synchronization related information transmitted from the UE, a physical sidelink discovery channel (PDSCH) for transmitting a sidelink discovery message transmitted from the UE, a physical sidelink control channel (PSCCH) for transmitting a control signal for sidelink communication transmitted from the UE, and a physical sidelink shared channel (PSSCH) for transmitting data for sidelink communication transmitted from the UE. Sidelink physical channels are mapped to sidelink transmission channels. The PSBCH is mapped to a sidelink broadcast channel (SL-BCH). The PSDCH is mapped to a sidelink discovery channel (SL-DCH). The PSSCH is mapped to a sidelink shared channel (SL-SCH).

Even in the sidelink, logical channels are classified into control channels for information transmission in a control plane and traffic channels for information transmission in a user plane. The sidelink control channel includes a sidelink broadcast control channel (SBCCH), which is a sidelink channel for broadcasting sidelink system information from one UE to another UE. The SBCCH is mapped to a SL-BCH. The sidelink traffic channel includes a sidelink traffic channel (STCH), which is a point-to-multipoint channel for transmission of user information from one UE to another UE. The STCH is mapped to the SL-SCH. The channel may be used by only an UE capable of performing sidelink communication.

The UE supporting sidelink communication may operate in the following two modes for resource allocation. A first mode is scheduled resource allocation. Scheduled resource allocation may be referred to as a mode 1. In the mode 1, in order to transmit data, it is necessary that the UE is in RRC_CONNECTED. The UE requests a transmission resource from an eNB. The eNB schedules transmission resources for transmission of sidelink control information (SCI) and data. The UE transmits a scheduling request (dedicated scheduling request (D-SR) or random access) to the eNB and then transmits a sidelink buffer status report (BSR). Based on the sidelink BSR, the eNB may determine that the UE has data for sidelink communication transmission and estimate resources required for transmission. The eNB may schedule a transmission resource for sidelink communication using a configured sidelink radio network temporary identity (SL-RNTI).

A second mode is UE autonomous resource selection. The UE autonomous resource selection may be referred to as a mode 2. In the mode 2, the UE selects a resource from a resource pool and selects a transmission format for transmitting sidelink control information and data. There may be maximum eight resource pools preconfigured for out of coverage operations or provided by RRC signaling for in-coverage operations. One or more ProSe per-packet priorities (PPPPs) may be connected to each resource pool. For transmission of a MAC protocol data unit (PDU), the UE selects a resource pool having one of the same PPPPs as that of a logical channel having a highest PPPP among logical channels identified in the MAC PDU. Sidelink control pools and sidelink data pools are related to one-to-one. When a resource pool is selected, the selection is valid for an entire sidelink control period. After the sidelink control period ends, the UE may select again the resource pool.

There are two types of resource allocations in discovery message notifications. A first type is UE autonomous resource selection, which is a resource allocation procedure in which resources for announcing a discovery message are allocated on a non-UE specific basis. The UE autonomous resource selection may be referred to as a type 1. In the type 1, the eNB provides a resource pool configuration used for announcement of the discovery message to the UE. The configuration may be signaled by broadcast or dedicated signaling. The UE autonomously selects a radio resource from an indicated resource pool and announces a discovery message. The UE may announce a discovery message on a randomly selected discovery resource during each discovery period.

A second type is scheduled resource allocation, which is a resource allocation procedure in which resources for announcing discovery messages are allocated on a UE specific basis. Scheduled resource allocation may be referred to as a type 2. In the type 2, a UE of RRC_CONNECTED may require a resource for announcing a discovery message from an eNB through an RRC. The eNB allocates resources through an RRC. Resources are allocated within resource pools configured in the UE for notification.

Sidelink communication through ProSe UE-network relay is described. This may be referred to a section 23.10.4 of 3GPP TS 36.300 V14.0.0 (2016-09). ProSe UE-network relay provides a generic L3 forwarding function that may relay all types of IP traffic between a remote UE and a network. One-to-one and one-to-many sidelink communication is used between the remote UE and the relay UE. For both the remote UE and the relay UE, only one single carrier (i.e., public safety ProSe carrier) operation is supported (i.e., Uu and PC5 should be the same carrier for the relay/remote UE). The remote UE has been authenticated by a higher layer and may be in coverage of a public safety ProSe carrier or out of coverage of all supported carriers including a public safety ProSe carrier for UE-network relay discovery, (re)selection and communication. The relay UE is always in EUTRAN range. The relay UE and the remote UE perform sidelink communication and sidelink discovery.

The eNB controls whether the UE may serve as ProSe UE-network relay. When the eNB broadcasts information related to ProSe UE-network relay operation, the ProSe UE-network relay operation is supported in a cell. The eNB may provide a transmission resource for ProSe UE-network relay discovery using broadcast signaling for RRC_IDLE and dedicated signaling for RRC_CONNECTED, and a reception resource for ProSe UE-network relay discovery using broadcast signaling. Further, the eNB may broadcast a minimum and/or maximum Uu link quality (i.e., reference signal received power (RSRP)) threshold that the UE needs to satisfy before initiating a ProSe UE-network relay discovery procedure. In RRC_IDLE, when the eNB broadcasts a transmission resource pool, the UE uses a threshold in order to autonomously start or stop the ProSe UE-Network relay discovery procedure. In RRC_CONNECTED, the UE uses the threshold in order to determine whether the UE may indicate to the eNB that the UE is a relay UE and wants to start ProSe UE-network relay discovery. When the eNB does not broadcast a transmission resource pool for ProSe UE-network relay discovery, the UE may initiate a request for a ProSe UE-network relay discovery resource by dedicated signaling while considering the broadcast threshold. When ProSe UE-network relay is initiated by broadcast signaling, the relay UE may perform ProSe UE-network relay discovery in RRC_IDLE. When ProSe UE-network relay is initiated by dedicated signaling, the relay UE may perform ProSe UE-network relay discovery as long as the relay UE is in RRC_CONNECTED.

The relay UE performing sidelink communication for a ProSe UE-network relay operation should be in RRC_CONNECTED. After receiving a layer 2 link establishment request or a temporary mobile group identity (TMGI) monitoring request (higher layer message) from a remote UE, the relay UE notifies the eNB that it is a relay UE and intends to perform ProSe UE-network relay sidelink communication. The eNB may provide resources for ProSe UE-network relay communication.

The remote UE may determine when to begin monitoring for ProSe UE-network relay discovery. The remote UE may transmit a ProSe UE-network relay discovery induction message while in RRC_IDLE or RRC_CONNECTED according to a configuration of the resource for ProSe UE-network relay discovery. In order to connect or communicate with the relay UE, the eNB may broadcast a threshold value used by the remote UE in order to determine whether the remote UE may transmit a ProSe UE-Network relay discovery induction message. The remote UE in RRC_CONNECTED uses a broadcast threshold in order to determine whether it is a remote UE and may indicate that it wants to participate in ProSe UE-network relay discovery and/or communication. For a ProSe UE-network relay operation, the eNB may provide a transmission resource using broadcast or dedicated signaling or provide a reception resource using broadcast signaling. When the RSRP exceeds the broadcast threshold, the remote UE stops using the ProSe UE-network relay discovery search and communication resources. An accurate time that switches traffic from Uu to PC5 or vice versa depends on an upper layer.

The remote UE performs radio measurement in a PC5 interface and uses it together with higher layer criteria for relay UE selection and reselection. When a PC5 link quality exceeds the configured threshold (preconfigured or provided by the eNB), the relay UE is regarded to be suitable with respect to radio criteria. The remote UE selects the relay UE that meets higher layer criteria and that has a best PC5 link quality among all suitable relay UEs.

The remote UE triggers relay UE reselection in the following cases.
- PC5 signal strength of a current relay UE is lower than the configured signal strength threshold;
- Receive a layer 2 link release message (high layer message) from the relay UE.

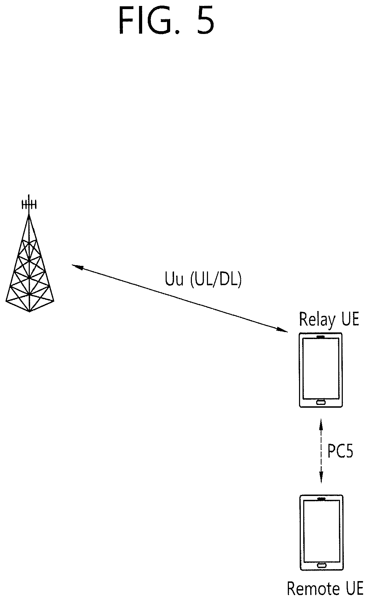

FIG. 5 shows an example of bidirectional UE-network relay. Referring to FIG. 5, the relay UE is used for relaying a UE specific data from remote UE in UL or is used for relaying UE specific data to a remote UE in DL. According to a bidirectional D2D link between the remote UE and the relay UE, large transmission time interval (TTI) bundles may be completely removed at both UL and DL. The remote UE is required to directly receive SIB and paging from the eNB. To support this in the form of a relay, the remote UE should have both D2D transmission and reception capabilities together with a Uu reception capability.

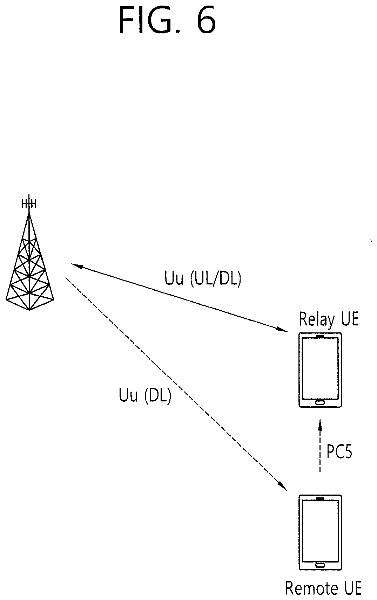

FIG. 6 shows an example of unidirectional UE-network relay. Referring to FIG. 6, a relay UE is used for relaying only UL data from a remote UE. Due to this restriction, large TTI bundles may be removed only in the UL. However, this method has the advantage that the D2D transmission capability is free because both Uu and D2D use the same transmission chain, and thus a low cost, such as enhanced MTC (eMTC). Rel-13 ProSe UE-network relay is layer 3 relay and may be enhanced to layer 2 relay in order to assist the eNB. Another advantage of unidirectional relay is that the relay UE does not suffer from a half-duplex problem of the PC5 interface because the relay UE receives only on the PC5 interface.

That is, in some cases, the remote UE may have a D2D transmission capability or both a transmission/reception capability, while the relay UE may be a general UE having D2D transmission/reception and Uu transmission/reception capabilities.

Based on current L2 relay communication, the base station (i.e., eNB of LTE) should store all contexts of both the relay UE and the remote UE. Further, current sidelink transmission/reception operations are performed through resources configured/allocated by the base station. That is, sidelink resources for the relay UE and the remote UE are configured/allocated by the base station. However, in order for resources for sidelink transmission/reception to be configured/allocated by the base station, scheduling requests/grants for resources should be exchanged between the base station and the remote UE. More specifically, in order for the remote UE to transmit a scheduling request to the base station and to receive a scheduling grant from the base station, the signaling should be relayed through the relay UE. This is not preferable because it causes problems such as power consumption and signaling overhead, and is also inefficient in terms of delay.

In order to solve the above problems, the present disclosure will be described through various embodiments below. In the following embodiments, the base station may be either an eNB of LTE or a gNB of NR.

### 1. Embodiment 1

According to Embodiment 1 of the present disclosure, in order to reduce power consumption and signaling overhead caused by scheduling requests/grants exchanged between a remote UE and a base station, the relay UE configures sidelink transmission resources and sidelink reception resources for the remote UE. More specifically, the relay UE configures a sidelink transmission resource thereof that may be a sidelink reception resource of the remote UE. Further, the relay UE configures a sidelink reception resource thereof that may be a sidelink transmission resource of the remote UE.

### (1) Embodiment 1-1

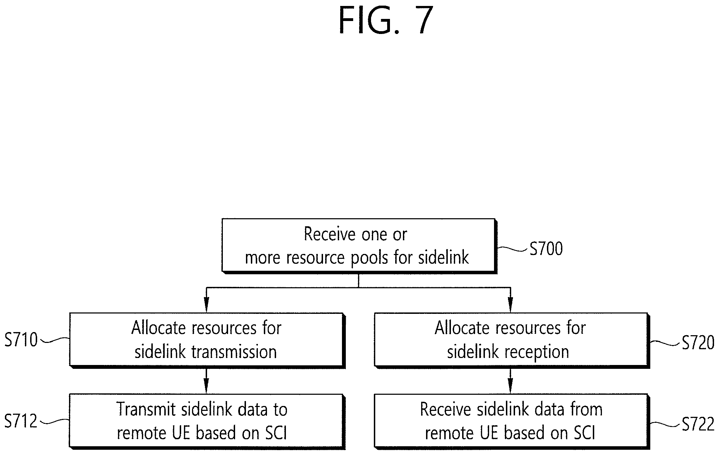

FIG. 7 shows a method of performing sidelink communication according to an embodiment 1-1 of the present disclosure. The embodiment 1-1 of the present disclosure described in FIG. 7 shows a method of allocating sidelink resources in terms of a relay UE.

In step S700, the relay UE receives one or more resource pools for a sidelink from a base station. One or more resource pools for the sidelink may be received from the base station through system information or dedicated signaling.

In step S710, the relay UE allocates resources for sidelink transmission. More specifically, the relay UE selects a sidelink grant from one or more resource pools for the sidelink for sidelink transmission therefrom, and transmits SCI including the sidelink grant to the remote UE. Accordingly, the SCI schedules transmission of sidelink data of the relay UE. Further, the SCI indicates the remote UE connected to the relay UE. More specifically, in order to indicate the remote UE, the SCI may include a destination ID of the remote UE or include a local ID of the remote UE. The local ID of the remote UE may be allocated by a base station. The local ID of the remote UE may be used for uniquely identifying the remote UE among all connected UEs including the relay UE and all remote UEs connected thereto.

In step S712, the relay UE transmits sidelink data to the remote UE based on the SCI.

Alternatively, in step S720, the relay UE allocates resources for sidelink reception. More specifically, the relay UE selects a sidelink grant from one or more resource pools for the sidelink for sidelink transmission from the remote UE (i.e., sidelink reception at the relay UE) and transmits SCI including the sidelink grant to the remote UE. Accordingly, the SCI schedules transmission of sidelink data of the remote UE. Further, the SCI indicates the relay UE. More specifically, in order to indicate the relay UE, the SCI may include a destination ID of the relay UE or a local ID of the relay UE. The local ID of the relay UE may be allocated by the base station. The local ID of the relay UE may be used for uniquely identifying the relay UE among all connected UEs including the relay UE and all remote UEs connected thereto.

In step S722, the relay UE receives sidelink data from the remote UE based on the SCI.

### (2) Embodiment 1-2

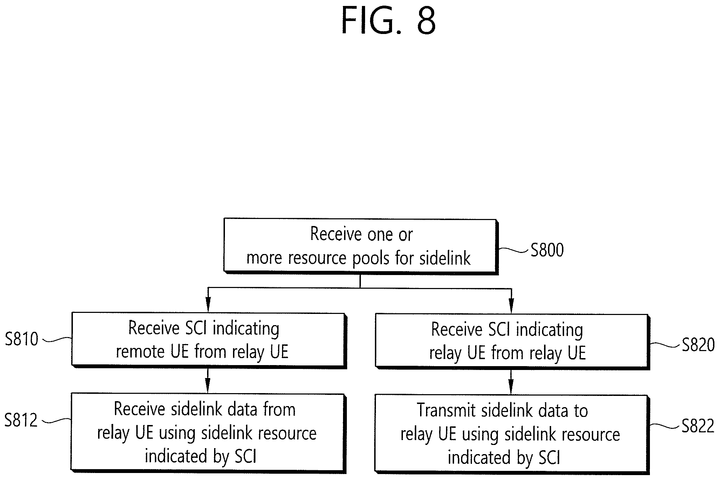

FIG. 8 shows a method of performing sidelink communication according to an embodiment 1-2 of the present disclosure. The embodiment 1-2 of the present disclosure described in FIG. 8 shows a method of allocating sidelink resources in terms of a remote UE.

In step S800, the remote UE receives one or more resource pools for a sidelink from the base station or the relay UE.

In step S810, the remote UE receives SCI indicating the remote UE from the relay UE. The SCI includes a sidelink grant that schedules transmission of sidelink data of the relay UE. More specifically, in order to indicate the remote UE, the SCI may include a destination ID of the remote UE or a local ID of the remote UE. The local ID of the remote UE may be allocated by the base station. The local ID of the remote UE may be used for uniquely identifying the remote UE among all connected UEs including the relay UE and all remote UEs connected thereto.

In step S812, the remote UE receives sidelink data from the relay UE using a sidelink resource indicated by the SCI.

Alternatively, in step S820, the remote UE receives SCI indicating the relay UE from the relay UE. The SCI includes a sidelink grant that schedules transmission of sidelink data of the remote UE. More specifically, in order to indicate the relay UE, the SCI may include a destination ID of the relay UE or a local ID of the relay UE. The local ID of the relay UE may be allocated by the base station. The local ID of the relay UE may be used for uniquely identifying the relay UE among all connected UEs including the relay UE and all remote UEs connected thereto.

In step S822, the remote UE transmits sidelink data to the relay UE using the sidelink resource indicated by the SCI.

The following cases may be further considered.
(1) When a resource pool is dedicated to the remote UE, the remote UE may regard that SCI indicating the relay UE corresponds to sidelink grant thereof.
(2) When SCI indicates the remote UE, the remote UE may regard that SCI indicating the relay UE corresponds to a sidelink grant thereof.
(3) When the sidelink grant is received in a subframe allocated to the remote UE (e.g., based on a sidelink discontinuous reception (DRX) configuration), the remote UE may regard that SCI indicating the relay UE corresponds to a sidelink grant thereof.

### 2. Embodiment 2

According to Embodiment 2 of the present disclosure, in order to reduce delay and signaling overhead of resource allocation by scheduling requests/grants exchanged between a remote UE and a base station, the relay UE allocates a portion of sidelink resources configured therefor for the remote UE. Therefore, the remote UE does not need to exchange scheduling requests/grants with the base station, and thus delay of resource allocation may also be reduced.

### (1) Embodiment 2-1

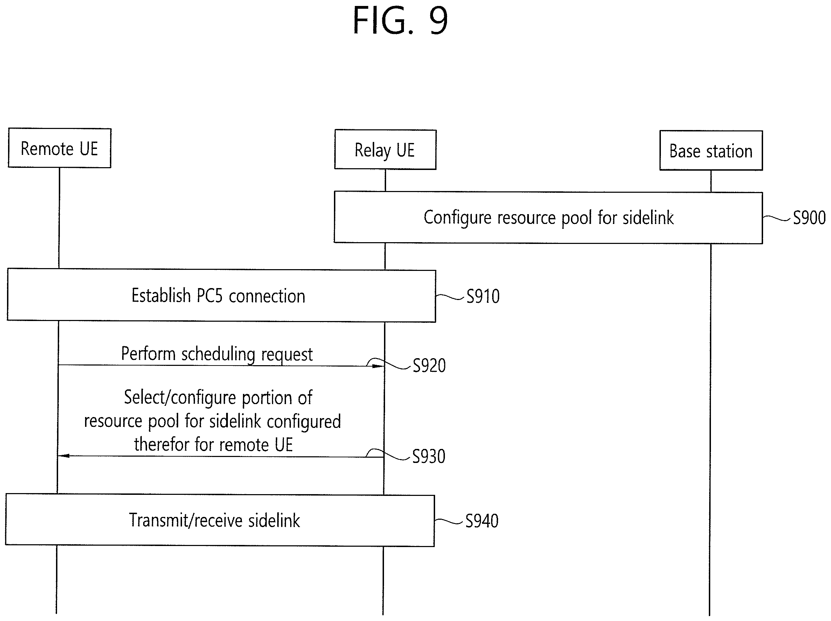

FIG. 9 shows a method of performing sidelink communication according to an embodiment 2-1 of the present disclosure. The embodiment 2-1 of the present disclosure described in FIG. 9 shows an operation of a relay UE.

In step S900, the relay UE requests the base station to allocate a resource pool for a sidelink or receives a resource pool configuration for a sidelink from the base station. The base station may be either an eNB of LTE or a gNB of NR. The resource pool may be requested for all remote UEs connected to the relay UE.

In step S910, the relay UE establishes a PC5 connection with one or more remote UEs.

In step S920, the remote UE connected to the relay UE performs a scheduling request toward the base station.

In step S930, the relay UE may know that the remote UE has transmitted a scheduling request toward the base station. Therefore, the relay UE selects a portion of the resource pool for a sidelink configured therefor for the remote UE. The relay UE may select, for the remote UE, a portion of the resource pool for the sidelink configured therefor based on a network configuration. Alternatively, the relay UE may dynamically select, for the remote UE, a portion of the resource pool for the sidelink configured therefor according to a request of the remote UE. Further, the relay UE may select/configure a portion of the resource pool for the sidelink configured therefor for a plurality of connected remote UEs.

In step S940, the remote UE performs sidelink transmission/reception with the relay UE according to the resource configuration received from the relay UE. Accordingly, the relay UE may receive sidelink data from the remote UE using a portion of the sidelink resource pool configured therefor.

### (2) Embodiment 2-2

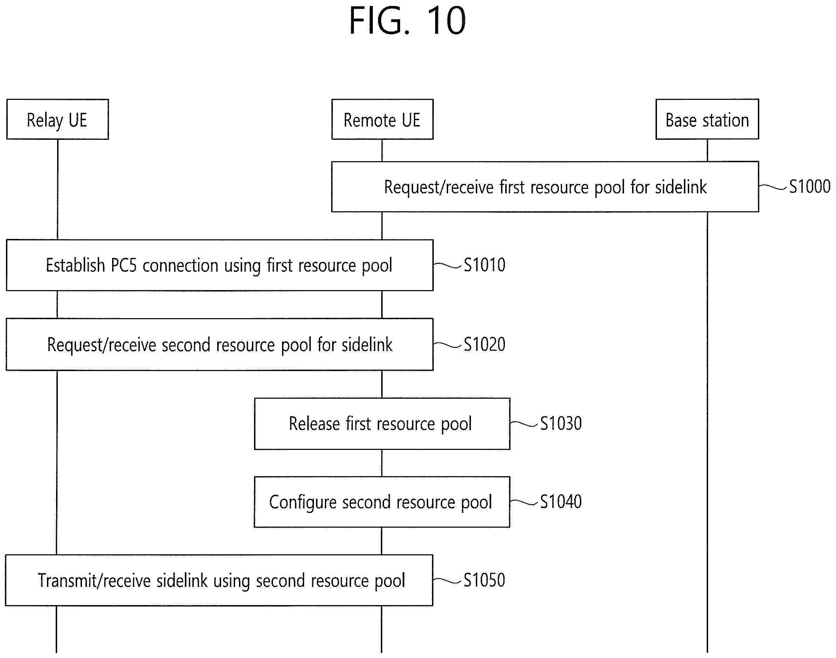

FIG. 10 shows a method of performing sidelink communication according to an embodiment 2-2 of the present disclosure. The embodiment 2-2 of the present disclosure described in FIG. 10 shows an operation of a remote UE.

In step S1000, the remote UE requests a base station to allocate a first resource pool for a sidelink. The base station may be either an eNB of LTE or a gNB of NR.

In step S1010, the remote UE establishes a PC5 connection with the relay UE using the first resource pool.

In step S1020, the remote UE requests the relay UE to allocate a second resource pool for a sidelink. Accordingly, the remote UE may receive the second resource pool from the relay UE.

In step S1030, the remote UE, having received the second resource pool from the relay UE, releases the first resource pool. In step S1040, the remote UE configures the second resource pool.

In step S1050, the remote UE performs sidelink transmission/reception with the relay UE using the second resource pool.

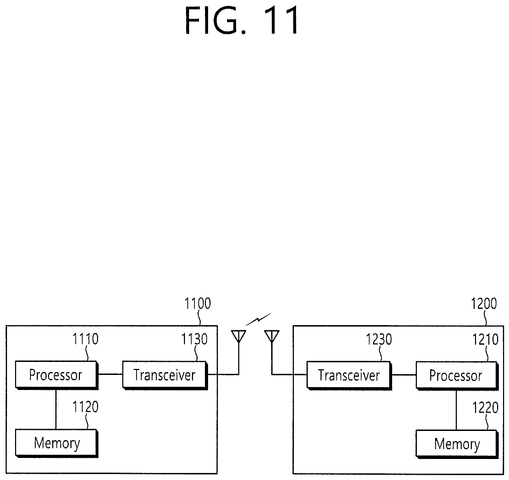

FIG. 11 shows a wireless communication system in which an embodiment of the present disclosure is implemented.

A remote UE 1100 includes a processor 1110, a memory 1120, and a transceiver 1130. The processor 1110 may be configured to implement functions, processes, and/or methods described in the present disclosure. More specifically, the processor 1110 may be configured to implement the operation of the remote UE in FIGS. 7 to 10. The memory 1120 is connected to the processor 1110 to store various information for driving the processor 1110. The transceiver 1130 is connected to the processor 1110 to transmit a radio signal to a relay UE 1200 or receive a radio signal from a relay UE 1200.

The relay UE 1200 includes a processor 1210, a memory 1220, and a transceiver 1230. The processor 1210 may be configured to implement functions, processes, and/or methods described in the present disclosure. More specifically, the processor 1210 may be configured to implement the operation of the relay UE in FIGS. 7 to 10. The memory 1220 is connected to the processor 1210 to store various information for driving the processor 1210. The transceiver 1230 is connected to the processor 1210 to transmit a radio signal to the remote UE 1100 or receive a radio signal from the remote UE 1100.

The processor 1110, 1210 may include application-specific integrated circuit (ASIC), other chipset, logical circuit and/or data processing device. The memory 1120, 1220 may include read-only memory (ROM), random access memory (RAM), flash memory, memory card, storage medium and/or other storage device. The transceiver 1130, 1230 may include a baseband circuit for processing a radio frequency signal. When an embodiment is implemented by software, the aforementioned method may be implemented by a module (process or function) which performs the aforementioned function. A module may be stored in the memory 1120, 1220 and executed by the processor 1110, 1210. The memory 1120, 1220 may be installed inside or outside the processor 1110, 1210 and may be connected to the processor 1110, 1210 via various well-known means.

In view of the exemplary systems described herein, methodologies that may be implemented in accordance with the disclosed subject matter have been described with reference to several flow diagrams. While for purposed of simplicity, the methodologies are shown and described as a series of steps or blocks, it is to be understood and appreciated that the claimed subject matter is not limited by the order of the steps or blocks, as some steps may occur in different orders or concurrently with other steps from what is depicted and described herein. Moreover, one skilled in the art would understand that the steps illustrated in the flow diagram are not exclusive and other steps may be included or one or more of the steps in the example flow diagram may be deleted without affecting the scope of the present disclosure.

## Claims

1. A method in which a first user equipment (UE) transmits or receives sidelink data in a wireless communication system, the method comprising:
receiving sidelink control information (SCI) comprising information about an identifier (ID) of the first UE or a second UE from the second UE;
when the information about the ID indicates the first UE, receiving the sidelink data from the second UE through a sidelink resource indicated by the SCI; and
when the information about the ID indicates the second UE, transmitting the sidelink data to the second UE through a sidelink resource indicated by the SCI.

2. The method of claim 1, wherein the information about the ID comprises either a destination ID of the first UE or a local ID of the first UE, when the information about the ID indicates the first UE.

3. The method of claim 2, wherein the local ID of the first UE is used for uniquely identifying the first UE among the second UE and all UEs connected to the second UE.

4. The method of claim 2, wherein the local ID of the first UE is allocated by a base station.

5. The method of claim 1, wherein the information about the ID comprises either a destination ID of the second UE or a local ID of the second UE, when the information about the ID indicates the second UE.

6. The method of claim 5, wherein the local ID of the second UE is used for uniquely identifying the second UE among the second UE and all UEs connected to the second UE.

7. The method of claim 5, wherein the local ID of the second UE is allocated by a base station.

8. The method of claim 1, wherein the first UE is a remote UE in UE-network relay, and
wherein the second UE is a relay UE in the UE-network relay.

9. The method of claim 1, further comprising receiving one or more resource pools for a sidelink from a base station or the second UE.

10. The method of claim 9, wherein the base station is either an eNB of long-term evolution (LTE) or a gNB of new radio access technology (NR).

11. A first user equipment (UE) in a wireless communication system, the first UE comprising:
a memory;
a transceiver; and
a processor connected to the memory and the transceiver,
wherein the processor is configured to:
control the transceiver to receive sidelink control information (SCI) comprising information about an identifier (ID) of the first UE or a second UE from the second UE;
control the transceiver to receive the sidelink data from the second UE through a sidelink resource indicated by the SCI, when the information about the ID indicates the first UE; and
control the transceiver to transmit the sidelink data to the second UE through a sidelink resource indicated by the SCI, when the information about the ID indicates the second UE.

12. The first UE of claim 11, wherein the information about the ID comprises either a destination ID of the first UE or a local ID of the first UE, when the information about the ID indicates the first UE.

13. The first UE of claim 12, wherein the local ID of the first UE is used for uniquely identifying the first UE among the second UE and all UEs connected to the second UE.

14. The first UE of claim 11, wherein the information about the ID comprises either a destination ID of the second UE or a local ID of the second UE, when the information about the ID indicates the second UE.

15. The first UE of claim 14, wherein the local ID of the second UE is used for uniquely identifying the second UE among the second UE and all UEs connected to the second UE.
